# EUROPÄISCHE PATENTANMELDUNG

(11) **EP 1 191 653 A2**
(43) Veröffentlichungstag der Anmeldung: **27.03.2002**
(21) Anmeldenummer: 01120945.9
(22) Anmeldetag: 31.08.2001
(51) Int. Cl.: H02G 3/04

(54) **Feuerfester Kabelkanal, Verfahren zu seiner Herstellung sowie dafür geeignete Zwischenprodukte**

(30) Priorität: 20.09.2000 DE 10046431
(71) Anmelder: KNAUF GIPS KG, 74589 Satteldorf (DE)
(72) Erfinder: Birkmüller, Hans-Heinz, 91610 Insingen (DE); Kaiser, Manfred, 91610 Insingen (DE)
(74) Vertreter: Werner, Hans-Karsten, Dr.Dipl.-Chem.

(57) **Zusammenfassung**

Der feuerfeste Kabelkanal auf Basis von Gipsfaserplatten ist zusammengesetzt aus vorgefertigten Seitenwänden, die an ihren Oberkanten und ihren Unterkanten jeweils nach innen gerichtete Falze aufweisen, sowie aus Bodenplatten und Abdeckplatten, die an ihren Seitenkanten zu den Falzen passende nach oben bzw. nach unten weisende Nuten aufweisen.

## Beschreibung

Gegenstand der vorliegenden Erfindung ist ein feuerfester Kabelkanal auf Basis von Gipsfaserplatten sowie Verfahren zu seiner Herstellung sowie dafür geeignete Zwischenprodukte.

Feuerfeste Kabelkanäle werden in zunehmendem Maße gefordert, insbesondere in öffentlichen Gebäuden, aber auch in zunehmendem Maße in Hochhäusern und auf Schiffen. Feuerfeste Kanäle sind bereits hergestellt worden aus Gipsfaserplatten, welche verarbeitet und bearbeitet werden können in ähnlicher Weise wie Holz, jedoch den Vorteil aufweisen, feuerfest zu sein. Derartige Kabelkanäle sind bisher jeweils individuell den jeweiligen Bedürfnissen entsprechend aus größeren Platten hergestellt worden, die entsprechend zugeschnitten wurden.

Aus der DE-A-37 07 255 ist eine Brandschutzvorrichtung für Kabeltrassen sowie ein Verfahren zu ihrer Herstellung bekannt, bei welchem die Kabel mit Hilfe von Plattenelementen derart ummantelt werden, dass ein geschlossener Kanal um die Kabel herum gebildet wird, und wobei die Kabel nach dem Einlegen in und vor dem Verschließen des durch die Plattenelemente gebildeten Kanals mit einem branddämmenden Material beschichtet werden. Die Platten bestehen vorzugsweise aus Mineralfaserplatten, die auf beiden Seiten mit Faserzement bestrichen sind. Als weitere Materialien erwähnt sind Gasbetonplatten mit und ohne Zementbeschichtung, Gipskartonplatten oder Gipsfaserplatten. Aus den Plattenelementen werden vorzugsweise bereits in der Fabrik jeweils drei zu einer U-förmigen Rinne zusammengefügt, die in diesem vormontierten Zustand an die Baustelle transportiert wird. Nach dem Einlegen der Kabel in die U-förmige Rinne werden die Kabel mit einem branddämmenden Material beschichtet, so dass sich eine verhältnismäßig gleichmäßige Schicht auf der Oberseite der Kabel ablagert. Danach wird die U-förmige Rinne durch Aufsetzen des Deckelplattenelements verschlossen. Die Plattenelemente weisen vorzugsweise an ihren Oberkanten und Unterkanten jeweils nach innen gerichtete Falze auf. Es findet sich kein Hinweis darauf, wie die Plattenelemente in der Fabrik miteinander verbunden werden.

Die Erfindung hat sich die Aufgabe gestellt, feuerfeste Kabelkanäle auf Basis von Gipsfaserplatten zur Verfügung zu stellen, die aus vorgefertigten und werkseitig zugeschnittenen Teilen bestehen und aus diesen die Kabelkanäle rasch, aber einfach und flexibel an der Baustelle hergestellt werden können. Dabei soll die Anzahl der verschiedenen Teile möglichst gering gehalten werden, um die Fertigung, Transport und Lagerung so einfach und preiswert wie möglich zu gestalten. Aus diesen standardisierten Teilen soll dann in einfacher und zuverlässiger Weise der jeweils geforderte Kabelkanal hergestellt werden, der beispielsweise an der Decke des Raumes aufhängbar ausgestaltet ist oder aber am Boden befestigt werden kann. Weiterhin soll der Kabelkanal in einfacher Weise abgewinkelt, verzweigt, erweitert oder verjüngt werden können, wobei wiederum vorgefertigte standardisierte Teile zur Anwendung kommen sollen.

Diese Aufgabe wird gelöst dadurch, dass der Kabelkanal zusammengesetzt ist aus vorgefertigten Seitenwänden, die an ihren Oberkanten und an ihren Unterkanten jeweils nach innen gerichtete Falze aufweisen sowie aus Bodenplatten und Abdeckplatten, die an ihren Seitenkanten zu den Falzen passende nach oben bzw. nach unten weisende Nuten aufweisen. Um einzelne Abschnitte des Kabelkanals abdichtend zusammenstecken zu können, weisen alle Platten an ihren Enden Falze auf, die abwechselnd innen oder außen angebracht sind. Vorzugsweise weisen Falze und Nuten aller Platten etwa die halbe Stärke der Gipsfaserplatten auf, so dass diese stets zueinander passen und in beliebiger Weise miteinander verarbeitet werden können.

Zusammengehalten wird der Kabelkanal vorzugsweise durch Halterungen mit breitem Kopf, welche von unten durch fluchtende Bohrungen in den Bodenplatten und den Abdeckplatten durchsteckbar sind. Diese Halterungen können beispielsweise an der Decke des Raumes aufhängbar ausgestaltet sein. Sie können aber auch am Boden befestigt sein und werden dann von oben her zusammengedrückt. Als breiter Kopf sind besonders geeignet Stücke aus Gipsfaserplatte, welche in ihrer Mitte ein Bohrlochgewinde aufweisen. Dieses Gewinde kann entweder in die Gipsfaserplatte eingeschnitten sein oder aber aus einer Metallhülse bestehen, die in das mittige Bohrloch eingepasst und dort befestigt ist.

Um Abwinkelungen, Verzweigungen, Erweiterungen und Verjüngungen des Kabelkanals zu ermöglichen, werden Seitenwände, Bodenplatten und Abdeckplatten eingesetzt, deren Falze und Nuten entsprechend versetzt angebracht sind.

Der erfindungsgemäße feuerfeste Kabelkanal wird hergestellt, indem die Teile aus Gipsfaserplatten mit werkseitig vorgefertigten Falzen und Nuten zusammengesteckt und dann durch die Halterungen mit breitem Kopf durch fluchtende Bohrungen in Bodenplatten und Abdeckplatten miteinander verbunden werden. Die einzelnen Abschnitte des Kabelkanals werden dabei so zusammengesteckt, dass vorzugsweise innen wie außen eine glatte Wand entsteht, die Fugen zwischen den Abschnitten aber zweimal gewinkelt sind und somit den Durchtritt von Rauch oder heißen Gasen wirksam behindern.

Das Aufhängen an der Decke des Raumes oder die Befestigung am Boden kann beispielsweise erfolgen durch Eindübeln der Halterungen. Es können aber auch verschraubbare oder einhängbare Befestigungen zu Anwendung kommen.

Die für die Aufhängung oder Befestigung notwendigen fluchtenden Bohrungen in den Bodenplatten und Abdeckplatten können an der Baustelle gefertigt werden. Vorteilhafter ist jedoch, auch diese Bohrungen bereits standardisiert werkseitig anzufertigen und dann dafür zu sorgen, dass die Aufhängung an der Decke oder Befestigung am Boden in den entsprechend standardisierten Abständen erfolgt.

Für das erfindungsgemäße Verfahren werden somit für die Seitenwände Gipsfaserplatten benötigt, die an ihren Oberkanten und ihren Unterkanten jeweils nach innen gerichtete Falze aufweisen. Derartige Teile sind prinzipiell bekannt, da sie auch bei der bisherigen manuellen Anfertigung von Kabelkanälen vor Ort hergestellt und verarbeitet wurden. Neu sind hingegen werkseitig vorgefertigte Boden- und Abdeckplatten mit nach oben bzw. nach unten weisenden Nuten an den Seitenkanten, welche der halben Stärke der Gipsfaserplatten entsprechen. Neu sind auch werkseitig vorgefertigte Seitenwände sowie Boden- und Abdeckplatten für Abwinkelung, Verzweigung, Erweiterung und Verjüngung der Kabelkanäle mit entsprechend versetzten Falzen und Nuten. Gerade durch diese werkseitig vorgefertigten Teile entsteht aber ein sehr flexibles System, welches allen Anforderungen genügt und eine rasche, einfache und zuverlässige Montage des feuerfesten Kabelkanals ermöglicht.

In den anliegenden Figuren sind bevorzugte Ausführungsform der einzelnen Bauteile näher erläutert.

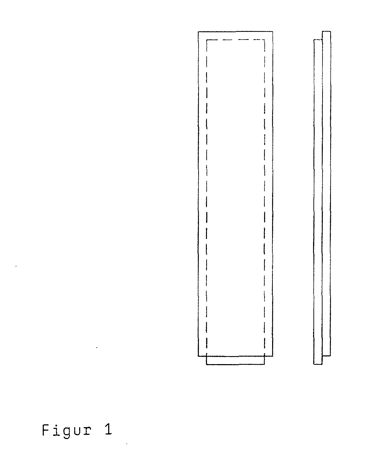

Figur 1 zeigt in der Aufsicht und Seitenansicht eine Seitenwand, bei der die Falze am Ende einmal außen und einmal innen angebracht sind.

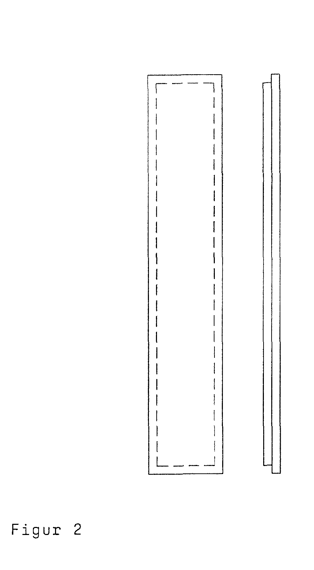

Figur 2 zeigt eine Seitenwand, bei der die Falze am Ende entweder beide außen oder beide innen angebracht sind.

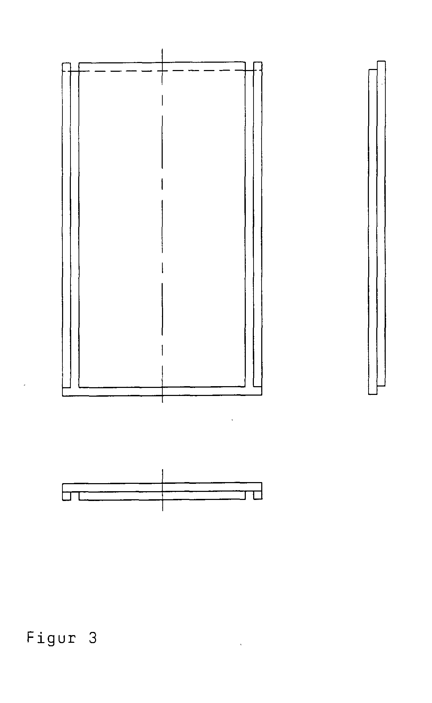

Figur 3 zeigt typische Bodenplatten, bei denen die Falze am Ende abwechselnd innen und außen angebracht sind.

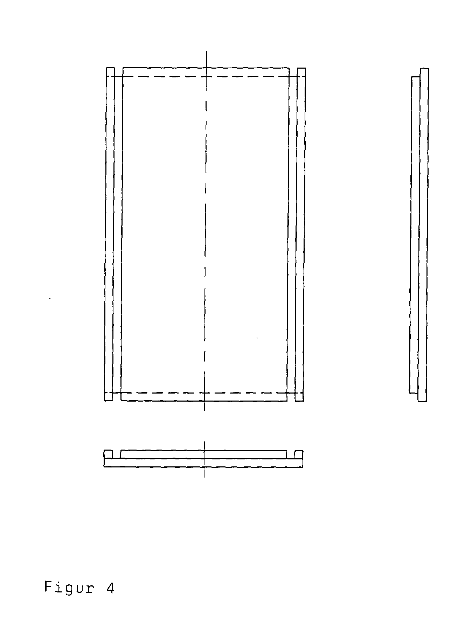

Figur 4 zeigt Bodenplatten und Abdeckplatten, bei denen die Falze am Ende entweder beide innen oder beide außen angebracht sind.

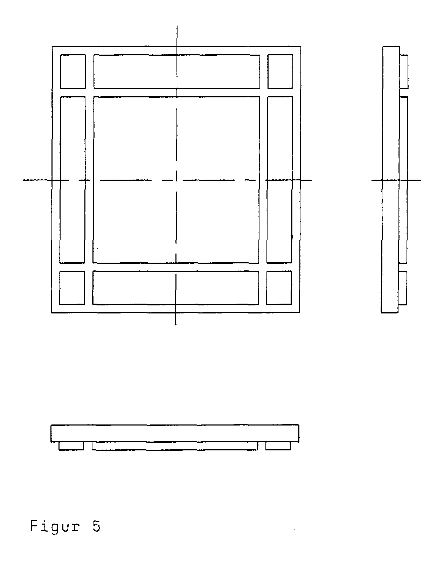

Figur 5 zeigt Bodenplatten und Abdeckplatten, die beispielsweise eine Kreuzung oder Abwinkelungen um 90° oder Verzweigungen ermöglichen. Diese Bodenplatten und Abdeckplatten sind aus stärkerem Material gebaut als die sonstigen Seitenwände, Bodenplatten und Abdeckplatten, so dass sie stärkeren Belastungen ausgesetzt werden können. Falze und Nuten passen aber zu Falzen und Nuten der Bodenplatten, Abdeckplatten und Seitenwände.

## Patentansprüche

1. Feuerfester Kabelkanal auf Basis von Gipsfaserplatten, **dadurch gekennzeichnet, dass** er zusammengesetzt ist aus vorgefertigten Seitenwänden, die an ihren Oberkanten und ihren Unterkanten jeweils nach innen gerichtete Falze aufweisen, sowie aus Bodenplatten und Abdeckplatten, die an ihren Seitenkanten zu den Falzen passende nach oben bzw. nach unten weisende Nuten aufweisen.

2. Feuerfester Kabelkanal gemäß Anspruch 1, **dadurch gekennzeichnet, dass** er aus einzelnen, abdichtend zusammensteckbaren Abschnitten besteht, indem ein oder beide Enden aller Platten Falze aufweisen, die abwechselnd innen oder außen angebracht sind.

3. Feuerfester Kabelkanal gemäß Anspruch 1 oder 2, **dadurch gekennzeichnet, dass** Falze und Nuten aller Platten etwa der halben Stärke der Gipsfaserplatten entsprechen.

4. Feuerfester Kabelkanal gemäß einem der Ansprüche 1 bis 3, **dadurch gekennzeichnet, dass** er zusammengehalten wird durch Halterungen mit breitem Kopf, welche von unten durch fluchtende Bohrungen in den Bodenplatten und den Abdeckplatten durchsteckbar und gewünschtenfalls an der Decke des Raumes aufhängbar ausgestaltet oder am Boden befestigt sind.

5. Feuerfester Kabelkanal gemäß Anspruch 4, **dadurch gekennzeichnet, dass** der breite Kopf aus einem Stück Gipsfaserplatte besteht, welches in seiner Mitte ein Bohrloch mit Gewinde aufweist.

6. Feuerfester Kabelkanal gemäß einem der Ansprüche 1 bis 5, **dadurch gekennzeichnet, dass** Abwinkelungen, Verzweigungen, Erweiterungen und Verjüngungen aus Seitenwänden sowie Bodenplatten und Abdeckplatten bestehen, deren Falze und Nuten entsprechend versetzt angebracht sind.

7. Verfahren zur Herstellung von feuerfesten Kabelkanälen gemäß einem der Ansprüche 1 bis 6, **dadurch gekennzeichnet, dass** Gipsfaserplatten mit werksseitig vorgefertigten Falzen und Nuten zusammengesteckt und durch Halterungen mit breitem Kopf durch fluchtende Bohrungen in den Bodenplatten und den Abdeckplatten miteinander verbunden werden, woraufhin sie gewünschtenfalls an der Decke des Raumes aufgehängt oder am Boden befestigt werden.

8. Werkseitig vorgefertigte Boden- und Abdeckplatten für feuerfeste Kabelkanäle gemäß Anspruch 3, **gekennzeichnet durch** nach oben bzw. nach unten weisende Nuten an den Seitenkanten, welche der halben Stärke der Gipsfaserplatten entsprechen.

9. Werkseitig vorgefertigte Seitenwände sowie Boden- und Abdeckplatten für Abwinkelungen, Verzweigungen, Erweiterungen und Verjüngungen der Kabelkanäle gemäß Anspruch 6, bestehend aus Gipsfaserplatten mit entsprechend versetzten Falzen und Nuten.
